# EUROPEAN PATENT APPLICATION

(11) **EP 4 850 957 A1**
(43) Date of publication of application: **09.12.2026**
(21) Application number: 25748363.6
(22) Date of filing: 17.01.2025
(51) Int. Cl.: B60K 26/02, G05G 7/02

(54) **ACCELERATOR DEVICE**

(30) Priority: 01.02.2024 JP 2024014244
(71) Applicant: DENSO CORPORATION, Kariya-city, Aichi 448-8661 (JP)
(72) Inventor: YOSHIDA Yusuke, Kariya-city, Aichi 4488661 (JP); TSUZUKI Yushi, Kariya-city, Aichi 4488661 (JP); KINOUCHI Soichi, Kariya-city, Aichi 4488661 (JP); MORI Hideyuki, Kariya-city, Aichi 4488661 (JP); YAMANAKA Tetsuji, Kariya-city, Aichi 4488661 (JP); KAJITA Yukinobu, Kariya-city, Aichi 4488661 (JP)
(74) Representative: Kuhnen & Wacker Patent- und Rechtsanwaltsbüro PartG mbB
(86) International application number: PCT/JP2025/001319
(87) International publication number: WO 2025/164367

(57) **Abstract**

An accelerator device includes a pedal lever (20), a reaction-force drive source (31), a drive-force transmission mechanism (40) and a controller (60). The pedal lever (20) is configured to be driven in response to depression of the pedal lever (20). The reaction-force drive source (31) is configured to generate a drive force in response to energization of the reaction-force drive source (31). The drive-force transmission mechanism (40) is configured to transmit the drive force of the reaction-force drive source (31) to the pedal lever (20) so as to apply an additional reaction force, which is a force directed in a direction opposite to a depression direction of the pedal lever (20), to the pedal lever (20). The controller (60) includes: a pedal opening degree calculation unit (61) that is configured to calculate a pedal opening degree, which is a rotational angle of the pedal lever (20); and a reaction-force control unit (65) that is configured to control the reaction-force drive source (31) such that the additional reaction force, which is applied to the pedal lever (20), coincides with a target reaction force value when the pedal opening degree reaches a pedal opening degree threshold. The reaction-force control unit (65) is configured to change a reaction-force increase rate according to a pedal-depression speed of the pedal lever (20) until the additional reaction force reaches the target reaction force value.

## Description

### CROSS REFERENCE TO RELATED APPLICATION

This application is based on and incorporates herein by reference Japanese Patent Application No. 2024-014244 filed on February 1, 2024, the contents of which are incorporated herein by reference.

### TECHNICAL FIELD

The present disclosure relates to an accelerator device.

### BACKGROUND ART

Previously, an accelerator pedal depression force control device for a vehicle is known. For example, in Patent Literature 1, at the time of increasing a depression force of an accelerator pedal beyond a base depression force, an increase rate of the depression force in a first stage is set smaller than an increase rate of the depression force in a second stage.

### CITATION LIST

### PATENT LITERATURE

PATENT LITERATURE 1: JP5316339B2

### SUMMARY OF INVENTION

In Patent Literature 1, because an increase rate of an additional reaction force in the first stage is set to be gentle, if the driver's pedal-depression force increases faster than the rate of increase of the applied additional reaction force, the pedal position cannot be maintained and the driver ends up depressing the pedal further. It is an objective of the present disclosure to provide an accelerator device that can appropriately apply a reaction force.

An accelerator device of the present disclosure includes a pedal lever, a reaction-force drive source, a drive-force transmission mechanism and a controller. The pedal lever is configured to be driven in response to depression of the pedal lever. The reaction-force drive source is configured to generate a drive force in response to energization of the reaction-force drive source. The drive-force transmission mechanism is configured to transmit the drive force of the reaction-force drive source to the pedal lever so as to apply an additional reaction force, which is a force directed in a direction opposite to a depression direction of the pedal lever, to the pedal lever.

The controller includes: a pedal opening degree calculation unit that is configured to calculate a pedal opening degree, which is a rotational angle of the pedal lever; and a reaction-force control unit that is configured to control the reaction-force drive source such that the additional reaction force, which is applied to the pedal lever, coincides with a target reaction force value when the pedal opening degree reaches a pedal opening degree threshold. The reaction-force control unit is configured to change a reaction-force increase rate according to a pedal-depression speed of the pedal lever until the additional reaction force reaches the target reaction force value. With this configuration, the reaction force can be appropriately applied to the pedal lever.

### BRIEF DESCRIPTION OF DRAWINGS

The present disclosure, together with additional objectives, features and advantages thereof, will be best understood from the following description in view of the accompanying drawings.
FIG. 1 is a schematic diagram showing an accelerator device according to one embodiment.
FIG. 2 is a block diagram showing a controller according to the embodiment.
FIG. 3 is a characteristic diagram showing a depression force characteristic in a case where an additional reaction force is not applied according to the embodiment.
FIG. 4 is a characteristic diagram showing a depression force characteristic in a case where the additional reaction force is applied according to the embodiment.
FIG. 5 is a flowchart illustrating a reaction force control process according to the embodiment.
FIG. 6 is a time chart in a case where the additional reaction force is not applied according to the embodiment.
FIG. 7 is a time chart showing reaction force control when the pedal-depression speed is relatively low according to the embodiment.
FIG. 8 is a time chart showing reaction force control when the pedal-depression speed is relatively high according to the embodiment.
FIG. 9 is an explanatory diagram showing a load-change amount according to the embodiment.
FIG. 10 is a time chart showing reaction force control when the pedal-depression speed is greater than an upper limit value according to the embodiment.
FIG. 11 is a characteristic diagram showing a depression force characteristic when the additional reaction force is greater than a holding depression force.
FIG. 12 is a time chart showing reaction force control when the additional reaction force is greater than the holding depression force.

### DESCRIPTION OF EMBODIMENTS

### (Embodiment)

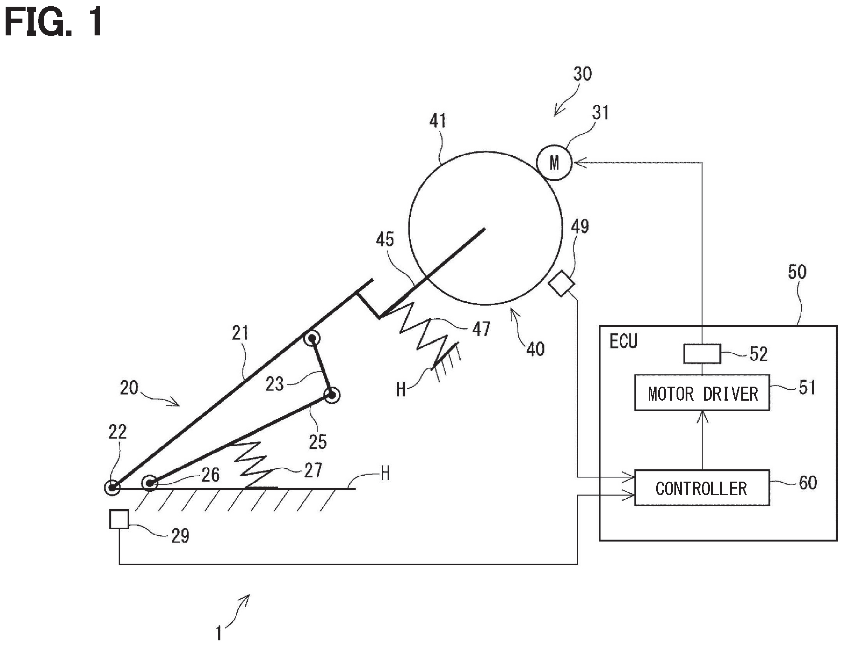

Hereinafter, an accelerator device according to the present disclosure will be described with reference to the drawings. The accelerator device according to one embodiment is shown in FIGS. 1 to 10. As shown in FIG. 1, the accelerator device 1 includes a pedal lever 20, an electric motor 31, a drive-force transmission mechanism 40 and an ECU 50 and is mounted on a vehicle not shown. The vehicle, on which the accelerator device 1 is mounted, is a so called hybrid vehicle that uses an internal combustion engine and a battery as driving sources for travel. Alternatively, the vehicle, on which the accelerator device 1 is mounted, may be a gasoline vehicle, a plug-in hybrid vehicle or an electric vehicle.

The pedal lever 20 has a pad 21, an arm 23 and a pedal 25 and is driven integrally by a depression operation of a human driver of the vehicle. The pad 21 is provided to be operable by the depression operation of the human driver. The pad 21 is rotatably supported by a fulcrum member 22 provided in a housing H. In FIG. 1, the pad 21 is shown in a so called floor mounted (organ) type that extends along one surface of the housing H, but it may be a suspended (pendant) type. In the present embodiment, housings, such as a pedal housing, a motor housing, which are not moved by the operation of the electric motor 31 or the depression operation of the pedal lever 20, will be collectively referred to as the housing H.

The arm 23 couples between the pad 21 and the pedal 25. One end portion of the pedal 25 is rotatably supported by the housing H through a fulcrum member 26, and the other end portion of the pedal 25 is coupled to the arm 23. As a result, the pad 21, the arm 23 and the pedal 25 are driven integrally through the operation of the pad 21 by the human driver. A pedal opening degree sensor 29, which detects a pedal opening degree, is installed to the one end portion of the pedal 25. A pedal urging member 27 is a compression coil spring having one end portion fixed to the pedal 25 and the other end portion fixed to the housing H. The pedal urging member 27 urges the pedal 25 in an accelerator closing direction.

The electric motor 31 is, for example, a brushed DC motor. A drive force of the electric motor 31 is transmitted to the pedal lever 20 via the drive-force transmission mechanism 40. Here, a series of components, which transmit the drive force from the electric motor 31 (serving as a reaction-force drive source) to the pedal lever 20 via the drive-force transmission mechanism 40, is referred to as an actuator 30.

The drive-force transmission mechanism 40 includes a gear set 41, an actuator lever 45 and an actuator lever urging member 47. The gear set 41 includes a motor gear, which is rotated integrally with a motor shaft, and a plurality of gears that mesh with the motor gear. The gear set 41 transmits the drive force of the electric motor 31 to the actuator lever 45. A position sensor 49 detects a rotational position of one of the gears of the gear set 41.

The actuator lever 45 has one end portion connected to the gear set 41 and the other end portion in contact with the pedal lever 20. Thus, the drive force of the electric motor 31 is transmitted to the pedal lever 20 via the drive-force transmission mechanism 40. In FIG. 1, although the other end portion of the actuator lever 45 is in contact with the pad 21, the other end portion of the actuator lever 45 may be configured to contact the arm 23 or the pedal 25. The actuator lever urging member 47 is a compression coil spring. The actuator lever urging member 47 urges the actuator lever 45 in the reaction-force application direction and keeps the actuator lever 45 in contact with the pedal lever 20.

The ECU 50 includes a motor driver 51, a current sensor 52 and a controller 60. The motor driver 51 has switching devices, not shown, for switching energization to the electric motor 31. The current sensor 52 detects the current supplied to the electric motor 31.

The controller 60 includes a microcomputer as its main component and has a CPU, a ROM, a RAM, an I/O device, and bus lines connecting these components, all of which are not shown in the drawing. The processes executed by the controller 60 may be software processes executed by the CPU based on programs stored in a tangible memory device such as the ROM (i.e., a readable non-transitory tangible recording medium), or they may be hardware processes performed by dedicated electronic circuits. In FIG. 1, each functional block is described as being configured in the single controller 60, but some functions may be configured in another ECU.

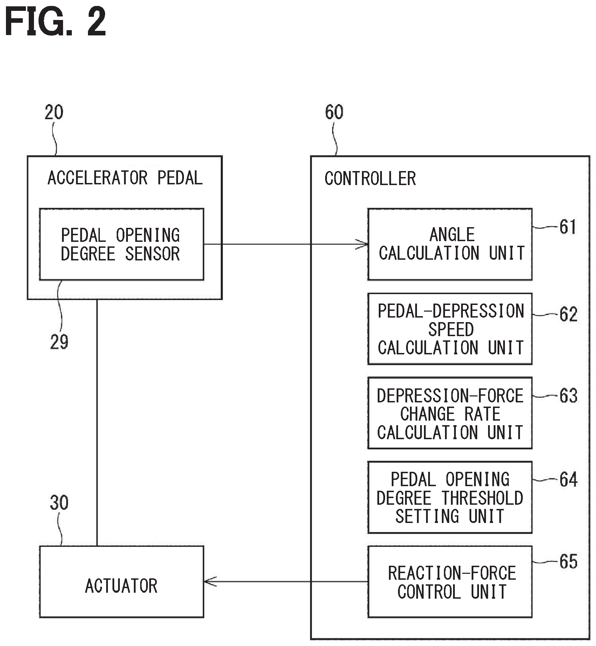

As shown in FIG. 2, the controller 60 includes, as functional blocks, an angle calculation unit 61, a pedal-depression speed calculation unit 62, a depression-force increase rate calculation unit 63, a pedal opening degree threshold setting unit 64 and a reaction-force control unit 65.

The angle calculation unit 61 acquires a measurement value of the pedal opening degree sensor 29 and calculates a pedal angle θap, which is the depression amount of the pedal lever 20 from a fully closed position thereof. FIG. 1 indicates that the measurement value is acquired directly from the pedal opening degree sensor 29. However, the measurement value may be acquired via communication from another device such as a higher-level ECU. Alternatively, the pedal angle θap may be calculated by gear ratio conversion based on the measurement value of the position sensor 49.

The pedal-depression speed calculation unit 62 calculates a pedal-depression speed Vap of the pedal lever 20 based on the pedal angle θap. The pedal-depression speed Vap takes a positive value when the pedal lever 20 is being depressed and a negative value when the pedal lever 20 is being returned.

The depression-force increase rate calculation unit 63 calculates a depression-force increase rate Vf, which is the increase amount of depression force per unit time, based on the pedal-depression speed Vap (see Equation (1)). In Equation (1), k1 is a coefficient for converting the pedal-depression speed Vap into the depression-force increase rate Vf.$Vf = Vap \times k 1$ Equation (1)

The pedal opening degree threshold setting unit 64 sets a pedal opening degree threshold Ath that is a threshold of the pedal angle, at or above which application of an additional reaction force is executed. In the present embodiment, when the pedal angle θap reaches the pedal opening degree threshold Ath, the additional reaction force is applied such that the pedal lever 20 is held at that position.

In the present embodiment, the pedal opening degree threshold Ath is set in accordance with the pedal opening degree at which the drive mode of the vehicle switches from the EV drive mode to the engine drive mode. Note that the value set in accordance with the pedal opening degree at which the drive mode switches from the EV drive mode to the engine drive mode is not limited to an exact value at which the drive mode switches and may include a margin. The same applies to the values related to a fuel consumption rate and to a legal travel speed described later.

If the vehicle equipped with the accelerator device 1 is the gasoline vehicle, the pedal opening degree threshold Ath is set in accordance with the fuel consumption rate. Specifically, a driving range DR1, in which the fuel consumption rate is relatively low and no fuel-enrichment control is applied, and a driving range DR2, in which the fuel consumption rate is relatively high and the fuel-enrichment control is applied during acceleration, are set. Depending on the driving state, the pedal opening degree threshold Ath is set according to the pedal opening degree at which the driving range DR1 switches to the driving range DR2.

Alternatively, the pedal opening degree threshold Ath may be set in accordance with the pedal opening degree corresponding to the vehicle drive force that exceeds the legal travel speed. For example, by linking with an onboard camera or a navigation system, when the vehicle is located in a safety-conscious area such as a Zone 30 (30 km/h zone), a pedal opening degree, which corresponds to generation of the drive force of the vehicle that would cause the vehicle to exceed the speed limit, is set as the pedal opening degree threshold Ath, thereby suppressing vehicle speed and guiding toward safe driving.

The reaction-force control unit 65 applies the additional reaction force to the pedal lever 20 by executing energization to the electric motor 31 when the pedal angle θap becomes equal to or larger than the pedal opening degree threshold Ath. By applying the reaction force to create a wall-like feel at the pedal position where further depression would worsen the fuel economy, the human driver's further depression of the pedal lever 20 is suppressed.

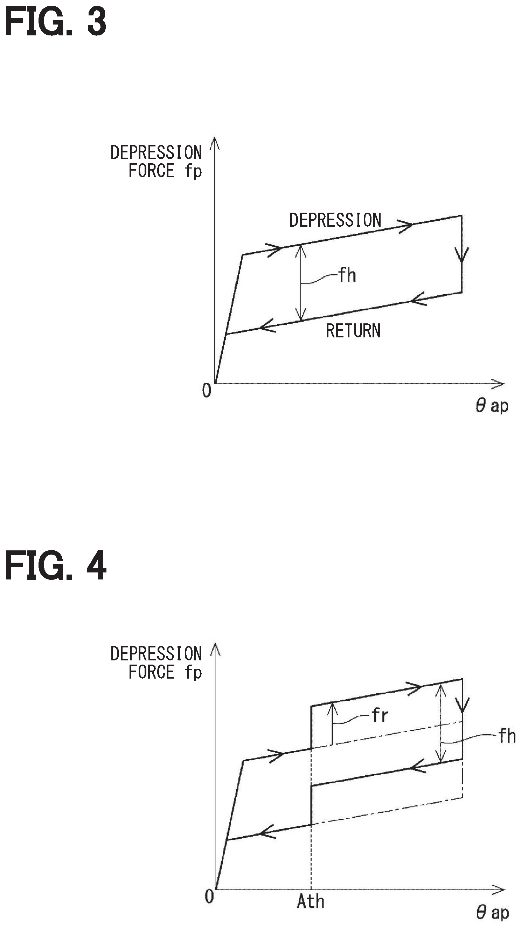

The depression force characteristic of the pedal lever 20 is shown in FIGS. 3 and 4. In FIGS. 3 and 4, the horizontal axis represents the pedal angle θap, and the vertical axis represents the depression force. FIG. 3 shows the depression force characteristic when the additional reaction force is not applied. In FIG. 3, the depression force fp increases when the pedal lever 20 is depressed and decreases when the pedal lever 20 is returned. In addition, the relationship between the pedal force and the pedal angle θap exhibits a hysteresis loop, such that the pedal force differs between the depression operation time and the return operation time. Hereinafter, the difference in the depression force between the depression operation time and the return operation time is defined as a holding depression force fh. In the present embodiment, within the hysteresis loop, the holding depression force fh is constant regardless of the pedal angle θap, but the holding depression force fh may alternatively be set to vary according to the pedal angle θap.

FIG. 4 shows the depression force characteristic when the additional reaction force is applied. In FIG. 4, a dot-dash line indicates the depression force characteristic in the case where the additional reaction force is not applied. As shown in FIG. 4, when the pedal angle θap becomes equal to or larger than the pedal opening degree threshold Ath, the additional reaction force fr is applied. In the present embodiment, the additional reaction force fr is set to a value smaller than the holding depression force fh such that the pedal angle θap is held at the pedal opening degree threshold Ath. That is, fr < fh.

Here, if the increase rate of the additional reaction force fr is smaller than the increase rate of the depression force fp when the human driver depresses the pedal lever 20, the application of the additional reaction force cannot keep up, and the human driver may further depress the pedal lever 20. If the driving range switches due to further depression, the fuel-efficient driving range may not be fully utilized. Accordingly, in the present embodiment, the increase rate of the additional reaction force fr is controlled based on the pedal-depression speed Vap of the pedal lever 20.

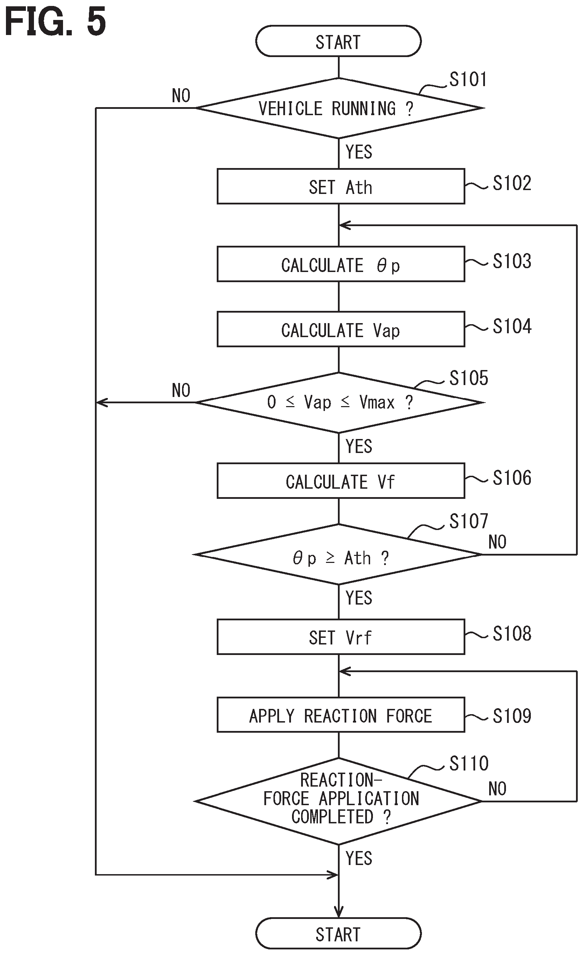

A reaction force control process of the present embodiment will be described based on a flowchart of FIG. 5. This process is executed at a predetermined cycle in the controller 60. The term "step," such as "step S101," is omitted below and indicated simply by the symbol "S".

In S101, the controller 60 determines whether the vehicle is running. If it is determined that the vehicle is not running (S101: NO), the process from S102 onward is skipped. If it is determined that the vehicle is running (S101: YES), the process proceeds to S102.

In S102, the pedal opening degree threshold setting unit 64 sets the pedal opening degree threshold Ath at which the additional reaction force is applied. In S103, the angle calculation unit 61 calculates the pedal angle θap based on the measurement value of the pedal opening degree sensor 29. In S104, the pedal-depression speed calculation unit 62 calculates the pedal-depression speed Vap based on the pedal angle θap.

In S105, the reaction-force control unit 65 determines whether the pedal-depression speed Vap is equal to or greater than 0 but is equal to or less than an upper limit value Vmax. The upper limit value Vmax defines an upper limit of an additional reaction force application range that is a range in which the additional reaction force is applied. If the pedal-depression speed Vap is less than 0 or greater than the upper limit value Vmax (S105: NO), the process from S106 onward is skipped and the additional reaction force is not applied. Specifically, if the pedal-depression speed Vap is less than 0, i.e., when the pedal lever 20 is in a return operation state, the additional reaction force is not applied. Also, if the pedal-depression speed Vap is greater than the upper limit value Vmax, it is determined that the human driver intends to accelerate, and thereby the additional reaction force is not applied so that the human driver's pedal operation is prioritized. If the pedal-depression speed Vap is equal to or greater than 0 and equal to or less than the upper limit value Vmax (S105: YES), the process proceeds to S106.

In S106, the depression-force increase rate calculation unit 63 calculates the depression-force increase rate Vf based on the pedal-depression speed Vap (see Equation (1)). In S107, the reaction-force control unit 65 determines whether the pedal angle θap is equal to or greater than the pedal opening degree threshold Ath. If it is determined that the pedal angle θap is less than the pedal opening degree threshold Ath (S107: NO), the process returns to S103. If it is determined that the pedal angle θap is equal to or greater than the pedal opening degree threshold Ath (S107: YES), the process proceeds to S108.

In S108, the reaction-force control unit 65 sets a reaction force increase rate Vrf (see Equation (2)). A coefficient k2 in Equation (2) is set to any value greater than 1 so that further depression of the pedal lever 20 does not occur. In Equation (2), the reaction force increase rate Vrf is calculated based on the depression-force increase rate Vf. Alternatively, the reaction force increase rate Vrf may be calculated directly from the pedal-depression speed Vap (see Equation (3)). A coefficient k3 in Equation (3) is a value that corresponds to k1 × k2.$Vrf = Vf \times k 2$ Equation (2) $Vrf = Vap \times k 3$ Equation (3)

**It** is desirable to use, as the depression-force increase rate Vf for calculating the reaction-force increase rate Vrf, the most recent value obtained when (i.e., immediately after) the pedal angle θap exceeds the pedal opening degree threshold Ath. In addition, taking into account variations in the human driver's pedal operation and a measurement error, the reaction force increase rate Vrf may be calculated using a calculated value such as an averaged value of the depression-force increase rate Vf over a predetermined range before the pedal angle θap reaches the pedal opening degree threshold Ath.

In S109, the reaction-force control unit 65 controls energization of the electric motor 31 such that the reaction force increase rate Vrf coincides with a rate set in S108 and an additional reaction force is applied to the pedal lever 20. In S110, the reaction-force control unit 65 determines whether the additional reaction force has reached a target reaction force value Fr* and thereby the application of the additional reaction force has been completed. If it is determined that the application of the additional reaction force has not been completed (S110: NO), the process returns to S109 and continues the application of the additional reaction force. If it is determined that the application of the additional reaction force has been completed (S110: YES), this routine ends. Note that the process for holding the reaction force and for releasing the reaction force after the target value is reached is executed in a separate process.

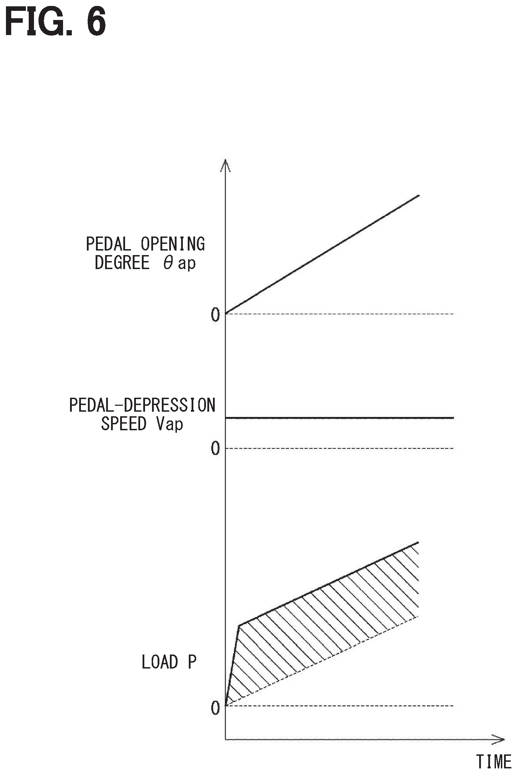

The reaction force control process of the present embodiment will be described based on time charts of FIGS. 6 to 8 and FIG. 10. FIG. 6 shows a case where no reaction force control is performed. In FIG. 6, a common time axis is taken on the horizontal axis, and from the top, the pedal angle θap, the pedal-depression speed Vap and the load P are shown. A hatched region indicates a hysteresis region in which the pedal lever 20 is self-held due to hysteresis. As shown in FIG. 6, in the case where the additional reaction force is not applied, when the human driver depresses the pedal lever 20 at a constant speed, the pedal angle θap increases at a constant rate.

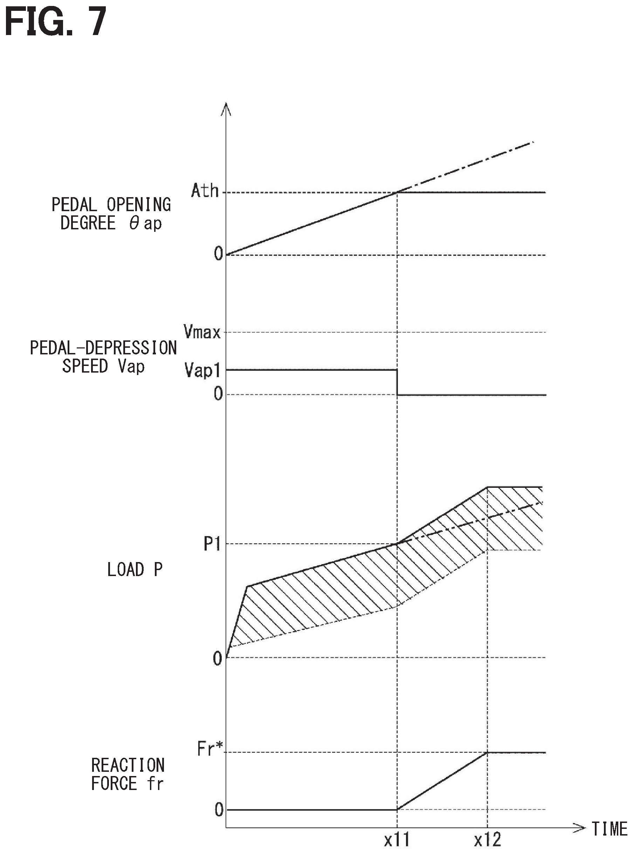

In FIGS. 7, 8, 10, and 12, a common time axis is taken on the horizontal axis, and from the top, the pedal angle θap, the pedal-depression speed Vap, the load **P,** and the reaction force fr are shown. The pedal angle θap in the case where the additional reaction force is not applied is indicated by a dot-dash line. Regarding the load P at the time of applying the additional reaction force, the pedal depression force characteristic is indicated by a solid line, and the human driver's depression force load is indicated by a dot-dot-dash line.

FIG. 7 shows a case where the human driver's pedal-depression speed Vap1 is relatively low. At a time point x11, the pedal angle θap reaches the pedal opening degree threshold Ath. At this time, the energization of the electric motor 31 is controlled such that the reaction force increases at a reaction force increase rate Vrf1 corresponding to the pedal-depression speed Vap1, and the additional reaction force is applied to the pedal lever 20. The load, which is applied when the pedal angle θap reaches the pedal opening degree threshold Ath, is defined as P1. At a time point x12, the additional reaction force reaches the target reaction force value Fr*. At this time, the application of the additional reaction force at the target reaction force value Fr* is continued. Furthermore, because the reaction force is applied to the pedal lever 20, the pedal angle θap is held at the pedal opening degree threshold Ath after the time point x11.

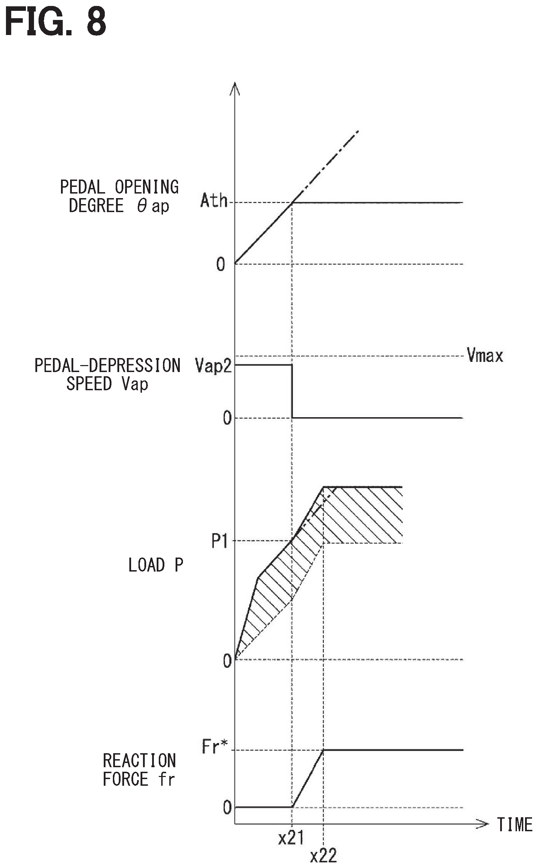

FIG. 8 shows a case where a pedal-depression speed Vap2 of the human driver is relatively high within a range that is below the upper limit value Vmax, i.e., a case where there is the relationship Vap1 < Vap2 < Vmax. When the pedal-depression speed of the human driver is relatively high, the pedal angle θap reaches the pedal opening degree threshold Ath at an earlier timing than in the case of the relatively low pedal-depression speed. That is, in the examples of FIGS. 7 and 8, there is the relationship of x21 < x11.

At the time point x21, the additional reaction force is applied to the pedal lever 20 by controlling the energization of the electric motor 31 such that the reaction force increases in accordance with the pedal-depression speed Vap2 at a reaction force increase rate Vrf2 which is greater than in the case of the relatively low pedal-depression speed. That is, in the examples of FIGS. 7 and 8, there is the relationship of Vrf2 > Vrf1. At a time point x22, the additional reaction force reaches the target reaction force value Fr*. Then, the application of the additional reaction force at the target reaction force value Fr* is continued.

In the example of FIG. 8, since the pedal-depression speed at the time when the pedal angle θap reached the pedal opening degree threshold Ath is higher than in the example of FIG. 7, the reaction force increase rate is made larger than in the example of FIG. 7 in order to suppress further depression. Therefore, a time period, which is from the time point of starting the application of the additional reaction force to the time point of reaching the target value, is shortened. That is, there is the relationship of (x22 - x21) < (x12 - x11).

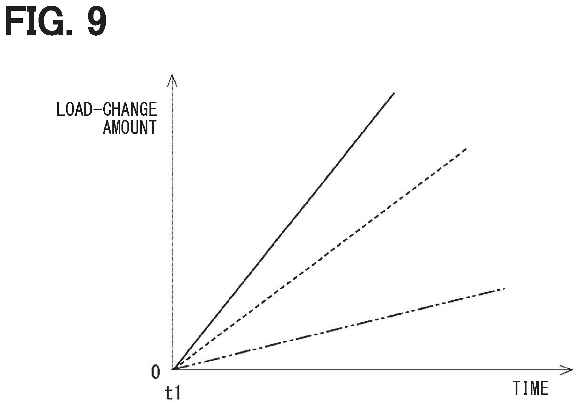

FIG. 9 shows the load-change amount of the depression force fp and the load-change amount of the additional reaction force fr. The horizontal axis represents time and the vertical axis represents the load-change amount, and the load-change amount of the depression force fp of the human driver is indicated by a broken line. As indicated by the dot-dot-dash line, when the load-change amount of the additional reaction force fr is smaller than the load-change amount of the depression force fp, the addition of the reaction force cannot keep up with the increase in the depression force of the human driver, and thereby the pedal lever 20 may possibly be further depressed. For example, in a case where the pedal opening degree threshold Ath is set according to fuel economy, if the pedal angle θap cannot be held at the pedal opening degree threshold Ath and thereby the pedal lever 20 is further depressed, the driving range with good fuel economy cannot be sufficiently utilized.

Accordingly, in the present embodiment, as indicated by the solid line, because the reaction force is applied such that the load-change amount of the additional reaction force fr becomes greater than the load-change amount of the depression force fp of the human driver, the human driver's further depression during the time of applying reaction force can be suppressed.

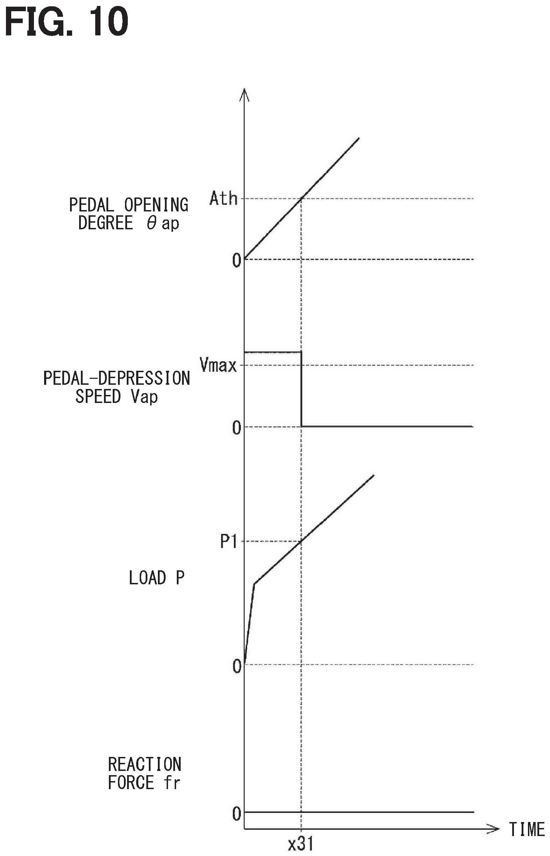

FIG. 10 shows a case where a pedal-depression speed Vap3 of the human driver is greater than the upper limit value Vmax. In the case where the pedal-depression speed Vap3 is greater than the upper limit value Vmax (i.e., Vap3 > Vmax), it is determined that the human driver has an intention to accelerate. Therefore, at a time point x31, even when the pedal angle θap reaches the pedal opening degree threshold Ath, an additional reaction force is not applied and the pedal operation of the human driver is given priority. As a result, the human driver's depression of the pedal lever 20 is not hindered, and the acceleration desired by the human driver can be achieved.

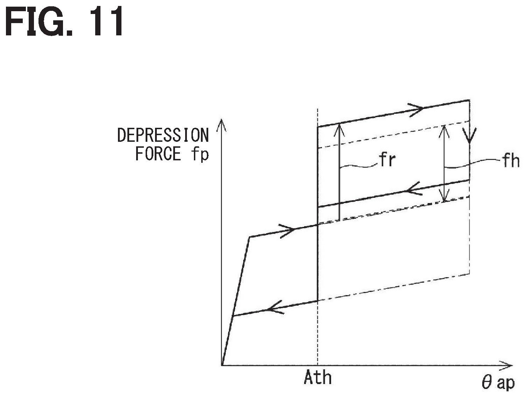

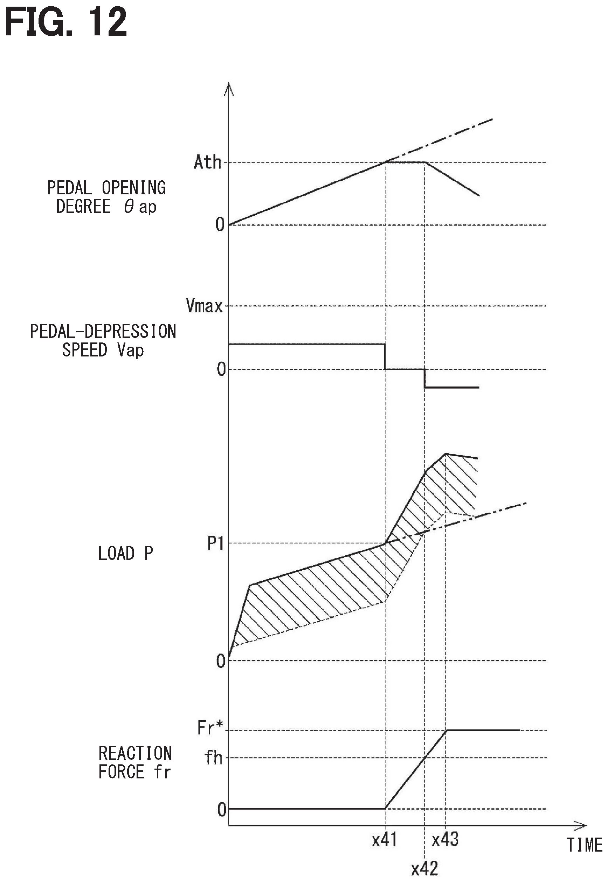

FIGS. 11 and 12 show reference examples in which the additional reaction force fr is greater than the holding depression force fh associated with the hysteresis. As shown in FIG. 11, when the additional reaction force fr is greater than the holding depression force fh, the hysteresis loop shifts upward from the depression force of the human driver. Therefore, when the pedal angle θap is greater than the pedal opening degree threshold Ath and the additional reaction force is being applied, the pedal lever 20 operates according to the return characteristic.

As shown in FIG. 12, when the pedal angle θap reaches the pedal opening degree threshold Ath at a time point x41, the application of the additional reaction force starts. At a time point x42, the additional reaction force fr reaches the holding depression force fh. At this time, the depression force of the human driver becomes less than or equal to the return-side depression force characteristic of the pedal lever 20, and thereby the pedal lever 20 returns. In the present embodiment, control is executed such that the additional reaction force fr is made smaller than the holding depression force fh so that the depression force of the human driver indicated by the dot-dot-dash line lies within the hatched hysteresis region. In this way, the return of the pedal lever 20 due to the application of the additional reaction force does not occur, thereby preventing deterioration of operability.

As described above, the accelerator device 1 includes the pedal lever 20, the electric motor 31, the drive-force transmission mechanism 40 and the controller 60. The pedal lever 20 is configured to be driven in response to depression of the pedal lever 20. The electric motor 31 is configured to generate the drive force in response to energization of the electric motor 31. The drive-force transmission mechanism 40 is configured to transmit the drive force of the electric motor 31 to the pedal lever 20 so as to apply the additional reaction force, which is a force directed in a direction opposite to a depression direction of the pedal lever 20, to the pedal lever 20.

The controller 60 includes: the angle calculation unit 61 that is configured to calculate the pedal angle θap, which is a rotational angle of the pedal lever 20; and the reaction-force control unit 65 that is configured to control the electric motor 31 such that the additional reaction force, which is applied to the pedal lever 20, coincides with the target reaction force value Fr* when the pedal angle θap reaches the pedal opening degree threshold Ath. The reaction-force control unit 65 is configured to change the reaction force increase rate Vrf according to the pedal-depression speed Vap of the pedal lever 20 until the additional reaction force reaches the target reaction force value Fr*. Accordingly, in accordance with the pedal-depression speed Vap of the pedal lever 20, the reaction force can be appropriately applied to the pedal lever 20.

Specifically, the reaction-force control unit 65 is configured to control the electric motor 31 such that the reaction force increase rate Vrf becomes greater than the depression-force increase rate Vf that is a value corresponding to the pedal-depression speed Vap. In this way, it is possible to suppress further depression of the pedal lever 20 at the time of applying the additional reaction force.

The pedal lever 20 has the hysteresis characteristic in which the depression force differs between the time of the depression operation of the pedal lever 20 and the time of the return operation of the pedal lever 20. The target reaction force value Fr* is less than or equal to the holding depression force fh that is a difference between the depression force at the time of the depression operation and the depression force at the time of the return operation. Accordingly, it is possible to prevent the pedal lever 20 from being pushed back due to the application of the additional reaction force.

When the pedal-depression speed Vap is greater than the upper limit value Vmax of the additional reaction force application range, the reaction-force control unit 65 maintains the state in which the additional reaction force is not applied even when the pedal angle θap reaches the pedal opening degree threshold Ath. When the pedal-depression speed Vap is greater than the upper limit value Vmax, it is regarded that the human driver has the intention to accelerate. Thus, by refraining from the application of the additional reaction force, the pedal lever 20 can be in a state in which it is operable without impeding the human driver's intention to accelerate.

The accelerator device 1 of the present embodiment is configured to be mounted on the vehicle that is switchable between the EV drive mode, in which the vehicle runs using the drive force of the electric traction motor, and the engine drive mode in which the vehicle runs using the drive force of the internal-combustion engine. The pedal opening degree threshold Ath is set in accordance with the pedal opening degree at which the EV drive mode switches to the engine drive mode. Thus, starting of the engine can be suppressed, and deterioration of fuel economy can be prevented.

Furthermore, the pedal opening degree threshold Ath may be set in accordance with the pedal opening degree at which the driving range where the fuel consumption rate is relatively small switches to the other driving range where the fuel consumption rate is relatively large. With such a configuration, for example, in the engine-powered vehicle, it is possible to guide driving to the driving range with good fuel economy.

The pedal opening degree threshold Ath may be set in accordance with the pedal opening degree that corresponds to a legal travel speed at a traveling location of the vehicle on which the accelerator device is mounted. Thus, the vehicle speed can be suppressed, and the vehicle can be guided toward safe driving.

In the present embodiment, the electric motor 31 serves as the reaction-force drive source, the angle calculation unit 61 serves as the pedal opening degree calculation unit, and the pedal angle θap serves as the pedal opening degree.

### (Other Embodiments)

In the embodiment described above, the reaction force increase rate is made variable in accordance with the pedal-depression speed. In another embodiment, in a case where a load sensor, which is configured to directly detect the depression force applied to the pedal lever, is provided, the reaction force increase rate may be calculated based on a measurement value of the load sensor.

In the embodiments described above, the drive source is a brushed DC motor. In another embodiment, an electric motor other than the brushed DC motor may be used as the drive power source, or a drive source other than the electric motor may be used. Additionally, the configuration of the drive-force transmission mechanism and the arrangement of its components may differ from the embodiments described above.

### (Disclosure of Technical Aspects)

This specification discloses technical aspects, which are listed below. Some of the aspects may be recited as a multiple dependent form, which depends from multiple preceding aspects. Furthermore, some of the aspects may be recited as a multiple dependent form depending from one or more preceding multiple dependent form(s). The aspect(s) recited in the multiple dependent form define multiple technical aspects.

### (Technical Aspect 1)

According to technical aspect 1, there is provided an accelerator device including:
a pedal lever (20) that is configured to be driven in response to depression of the pedal lever;
a reaction-force drive source (31) that is configured to generate a drive force in response to energization of the reaction-force drive source;
a drive-force transmission mechanism (40) that is configured to transmit the drive force of the reaction-force drive source to the pedal lever so as to apply an additional reaction force, which is a force directed in a direction opposite to a depression direction of the pedal lever, to the pedal lever; and
a controller (60) that includes:
   a pedal opening degree calculation unit (61) that is configured to calculate a pedal opening degree, which is a rotational angle of the pedal lever; and
   a reaction-force control unit (65) that is configured to control the reaction-force drive source such that the additional reaction force, which is applied to the pedal lever, coincides with a target reaction force value when the pedal opening degree reaches a pedal opening degree threshold, wherein:
the reaction-force control unit is configured to change a reaction-force increase rate according to a pedal-depression speed of the pedal lever until the additional reaction force reaches the target reaction force value.

### (Technical Aspect 2)

According to technical aspect 2, there is provided the accelerator device according to technical aspect 1, wherein the reaction-force control unit is configured to control the reaction-force drive source such that the reaction-force increase rate becomes greater than a depression-force increase rate that is a value corresponding to the pedal-depression speed.

### (Technical Aspect 3)

According to technical aspect 3, there is provided the accelerator device according to technical aspect 1 or 2, wherein:
the pedal lever is configured to have a hysteresis characteristic in which a depression force differs between a time of a depression operation of the pedal lever and a time of a return operation of the pedal lever; and
the target reaction force value is less than or equal to a holding depression force that is a difference between the depression force at the time of the depression operation and the depression force at the time of the return operation.

### (Technical Aspect 4)

According to technical aspect 4, there is provided the accelerator device according to any one of technical aspects 1 to 3, wherein when the pedal-depression speed is greater than an upper limit value of an additional reaction force application range, the reaction-force control unit maintains a state in which the additional reaction force is not applied even when the pedal opening degree reaches the pedal opening degree threshold.

### (Technical Aspect 5)

According to technical aspect 5, there is provided the accelerator device according to any one of technical aspects 1 to 4, wherein:
the accelerator device is configured to be mounted on a vehicle that is switchable between an EV drive mode, in which the vehicle runs using a drive force of an electric traction motor, and an engine drive mode in which the vehicle runs using a drive force of an internal-combustion engine; and
the pedal opening degree threshold is set in accordance with the pedal opening degree at which the EV drive mode switches to the engine drive mode.

### (Technical Aspect 6)

According to technical aspect 6, there is provided the accelerator device according to any one of technical aspects 1 to 4, wherein the pedal opening degree threshold is set in accordance with the pedal opening degree at which a driving range where a fuel consumption rate is relatively small switches to another driving range where the fuel consumption rate is relatively large.

### (Technical Aspect 7)

According to technical aspect 7, there is provided the accelerator device according to any one of technical aspects 1 to 4, wherein the pedal opening degree threshold is set in accordance with the pedal opening degree that corresponds to a legal travel speed at a traveling location of a vehicle on which the accelerator device is mounted.

The controller and its control method of the present disclosure may be realized by a dedicated computer that is provided by configuring at least one processor and a memory programmed to perform one or more functions embodied by a computer program. Alternatively, the controller and its control method of the present disclosure may be realized by a dedicated computer that is provided by configuring at least one processor with one or more dedicated hardware logic circuits. Further alternatively, the controller and its control method of the present disclosure may be realized by one or more dedicated computers that are provided by configuring a combination of: a processor programmed to perform one or more functions and a memory; and a processor composed of one or more hardware logic circuits. Further, the computer program may also be stored in a computer-readable, non-transitory, tangible storage medium as instructions to be executed by a computer. The present disclosure is not limited to the embodiments described above and can be implemented in various forms without departing from the spirit of the present disclosure.

The present disclosure has been described with reference to the embodiments. However, the present disclosure is not limited to the above embodiments and the structures described therein. The present disclosure also includes various variations and variations within the equivalent range. Also, various combinations and forms, as well as other combinations and forms that include only one element, more, or less, are within the scope and ideology of the present disclosure.

## Claims

1. An accelerator device comprising:
a pedal lever (20) that is configured to be driven in response to depression of the pedal lever;
a reaction-force drive source (31) that is configured to generate a drive force in response to energization of the reaction-force drive source;
a drive-force transmission mechanism (40) that is configured to transmit the drive force of the reaction-force drive source to the pedal lever so as to apply an additional reaction force, which is a force directed in a direction opposite to a depression direction of the pedal lever, to the pedal lever; and
a controller (60) that includes:
a pedal opening degree calculation unit (61) that is configured to calculate a pedal opening degree, which is a rotational angle of the pedal lever; and
a reaction-force control unit (65) that is configured to control the reaction-force drive source such that the additional reaction force, which is applied to the pedal lever, coincides with a target reaction force value when the pedal opening degree reaches a pedal opening degree threshold, wherein:
the reaction-force control unit is configured to change a reaction-force increase rate according to a pedal-depression speed of the pedal lever until the additional reaction force reaches the target reaction force value.

2. The accelerator device according to claim 1, wherein the reaction-force control unit is configured to control the reaction-force drive source such that the reaction-force increase rate becomes greater than a depression-force increase rate that is a value corresponding to the pedal-depression speed.

3. The accelerator device according to claim 1 or 2, wherein:
the pedal lever is configured to have a hysteresis characteristic in which a depression force differs between a time of a depression operation of the pedal lever and a time of a return operation of the pedal lever; and
the target reaction force value is less than or equal to a holding depression force that is a difference between the depression force at the time of the depression operation and the depression force at the time of the return operation.

4. The accelerator device according to claim 1, wherein when the pedal-depression speed is greater than an upper limit value of an additional reaction force application range, the reaction-force control unit maintains a state in which the additional reaction force is not applied even when the pedal opening degree reaches the pedal opening degree threshold.

5. The accelerator device according to claim 1, wherein:
the accelerator device is configured to be mounted on a vehicle that is switchable between an EV drive mode, in which the vehicle runs using a drive force of an electric traction motor, and an engine drive mode in which the vehicle runs using a drive force of an internal-combustion engine; and
the pedal opening degree threshold is set in accordance with the pedal opening degree at which the EV drive mode switches to the engine drive mode.

6. The accelerator device according to claim 1, wherein the pedal opening degree threshold is set in accordance with the pedal opening degree at which a driving range where a fuel consumption rate is relatively small switches to another driving range where the fuel consumption rate is relatively large.

7. The accelerator device according to claim 1, wherein the pedal opening degree threshold is set in accordance with the pedal opening degree that corresponds to a legal travel speed at a traveling location of a vehicle on which the accelerator device is mounted.
